(19) Europäisches Patentamt
European Patent Office
Office européen des brevets

(11) **EP 1 459 505 B1**

(12) **EUROPEAN PATENT SPECIFICATION**

(45) Date of publication and mention
of the grant of the patent:
**10.04.2013 Bulletin 2013/15**

(21) Application number: **02792540.3**

(22) Date of filing: **26.12.2002**

(51) Int Cl.:
***H04W 4/02*** *(2009.01)*

(86) International application number:
**PCT/US2002/041611**

(87) International publication number:
**WO 2003/058928 (17.07.2003 Gazette 2003/29)**

(54) **MOBILE DEVICE LOCATION BY MEANS OF FUZZY LOGIC**

Positionsbestimmung einer Mobileinrichtung mittels Fuzzylogik

LOCALISATION DE DISPOSITIF MOBILE AU MOYEN DE LA LOGIQUE FLOUE

(84) Designated Contracting States:
**AT BE BG CH CY CZ DE DK EE ES FI FR GB GR IE IT LI LU MC NL PT SE SI SK TR**

(30) Priority: **26.12.2001 US 34440**
**26.12.2001 US 34442**
**26.12.2001 US 37805**

(43) Date of publication of application:
**22.09.2004 Bulletin 2004/39**

(73) Proprietor: **Longhorn Acquisition, LLC**
**Annapolis, MD 21401 (US)**

(72) Inventors:
• **CHITHAMBARAM, Nemmara**
**Novato, CA 94945 (US)**
• **DEAGUIAR, John, R.**
**Sebastopol, CA 95472 (US)**
• **DING, Scott**
**Novato, CA 94947 (US)**

(74) Representative: **Maury, Richard Philip**
**Marks & Clerk LLP**
**90 Long Acre**
**London**
**WC2E 9RA (GB)**

(56) References cited:
**GB-A- 2 352 134      US-A- 5 790 800**
**US-A- 5 978 672      US-B1- 6 236 365**
**US-B1- 6 243 709      US-B1- 6 249 252**
**US-B1- 6 295 502**

**Description**

The present invention relates generally to location based services, and in particular, to a computer-implemented method and apparatus for refining the location of a device.

Detecting the location of a mobile device (e.g., a cellular phone, a personal digital assistant [PDA], etc.) is fundamental to providing location based services (LBS). Location based services are applications/services that utilize or are based on the location of a device/mobile device (e.g., a cellular phone, a personal digital assistant [PDA], etc.). For example, detecting that a device is located on a particular street (e.g., McInnis Parkway) allows an LBS application to provide a nearby theatre (e.g., Northgate Mall Cinema) when a user requests the closest entertainment option. Additional examples of LBS applications include traffic updates, location sensitive billing, fleet management, and asset and people tracking.

However, different protocols may be used by different cellular phone carriers to provide location information. Accordingly, in the prior art, LBS applications must be individually configured for each cellular phone carrier to provide location information. Such configuration customization is time consuming, subject to continuous and multiple modifications/updates, and burdensome for LBS providers.

Further, it is desirable to customize LBS applications for individual users based on information known about the users. However, such information is often not locally available and is difficult or impossible to access. Accordingly, what is needed is the ability to access and utilize a user's personal information.

Additionally, the device location currently provided by prior art wireless carriers is coarse (e.g., with precision ranging in 100s of meters or even 1000 meters or more). LBS services therefore need to refine this location to make the services valuable.

These problems may be better understood by describing prior art location detection and the use of personal information.

Location Detection Prior Art

As described above, a wide variety of methods/protocols are used by mobile device carriers to determine and provide a device's location to an LBS application. For example, different methods may be used to identify the device. Further, different protocols may be used to communicate with the carrier's mobile positioning server (MPS). Different formats for request/response exchange with the mobile positioning server may also be used. Additionally, there may be different levels of robustness, error handling, and network infrastructure stability.

There is often differing levels of precision/accuracy in the location provided by the MPS. For example, most location technology is cell sector based (i.e., a location is merely identified as being within a particular cell sector). Accordingly, the approximate location provided by the MPS could be 150 meters to several 100 meters, or even 1000 meters or more from the actual location of the device. Thus, most MPS services only provide a geographic region that a mobile device is within that is highly inaccurate.

The use of such varying methodologies are problematic for LBS providers. The focus of most LBS providers is in the application/business logic that utilizes the location of the device. However, for an application to be utilized in a variety of environments and platforms, substantial time and programming is necessary to customize the application for each cellular provider.

Further, the imprecision of the location affects the value of an LBS application to a user. For example, more popular LBS applications such as business/entertainment finders, friend finders, and/or routing could be significantly more valuable to the user, if the approximate current location is more accurate. Accordingly, what is needed is the capability to refine an approximate location to a location that better represents the user's true location or to a prominent landmark in the vicinity of the user that the user can readily identify.

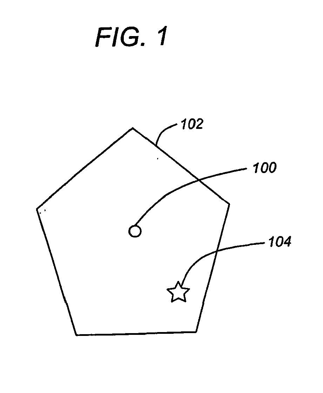

FIG. 1 illustrates an approximate location and an error polygon representing imprecision in the location. A device's approximate location is indicated as circle 100. An error polygon 102 represents the imprecision in the location. The problem in the prior art is to produce a refined location 104 that likely represents the user's true position. In addition, refinement is expected to produce a location 104 that is in the vicinity of the user's current location and is prominent enough to be readily identified by the user. Further, in the best case, this refined location 104 equates to the user's true current position.

User Customization Prior Art

LBS applications may be customized for individual users using personal information about the user (i.e., the user's profile information). For example, the user's profile information may include the user's name, home/office address, and even preferences related to choice of cuisine, travel preferences, etc. By transmitting this information to a wireless device (e.g., cellular phone), a LBS application may be highly customized to suit a user's preferences. This personalized data is currently available from telephone operators, wireless carrier databases, etc. and is often reloaded into a LBS database. For example, to utilize profile information maintained by a mobile phone carrier, the entire database may be transferred and stored locally.

Such reloading of personalized information results in increased cost (i.e., time, effort, and dollars), and synchronization problems (i.e. over a period of time, a difference may develop between the source and the data duplicated in the LBS database). Further, the data may come in different formats, different schemas, from databases from different vendors, from files from different operating systems, and custom data is not LBS-aware (i.e., does not have a location element). Additionally, the mobile phone carrier may not allow the transfer of the database.

US Patent 6 236 365 discloses a location system for commercial wireless telecommunication infrastructures, using an application programming interface, capable of processing local and global requests and using plural location technologies. GB-A-2352134 describes the comparison of a predicted signal property with a measured signal property and the derivation of a probability (from the comparison) that a handset is at one or more of the possible locations. The possible locations are distributed on a grid located at a likely area, which can be the coverage area of a serving base station, or an area designated as high probability by an earlier iteration of the same method.

US Patent 6 249 252 discloses the use of a history to determine the location of a handset.

The invention provides a method as defined in Claim 1, and apparatus as defined in Claim 7.

A device locator (also referred to as a device locator adapter) embodying the invention provides a common uniform application programming interface (API) for a user. The API isolates and allows application developers to ignore specifics of a mobile device carrier when locating a device. The device locator interacts with the specifics of a carrier's positioning server and the different methods of identifying the device as required by the carrier (e.g. cell phone number, a mobile subscriber international subscriber directory number (MSISDN) encoded in a "cookie" in a wireless application request, IP address encoded in the request header, or a pre-stored default in a user profile database). Further, the device locator deals with difference in protocols of the carrier (e.g., HTTP, HTTPS, etc.). The device locator provides robustness by dealing with network instabilities within a carrier's infrastructure.

Location based services could be of significantly increased value to a user if the application and content were automatically tailored to match a user's current activity profile. For example, a leisure visitor would like to have easy access to the "tourist landmarks" whereas a commuter might be interested in reviewing train and bus stations and alternative routes to quickly get to the destination.

Accordingly, once a device's approximate location is determined through the API, the approximate location may be refined by a mobile positioning server by applying one or more heuristics. For example, the approximate location may be snapped to the closest point on a street network or snapped to a landmark or "point of interest" in the vicinity. Alternatively, the refinement may look for locations in the vicinity of the approximate location, that the mobile device user has recently visited (e.g., by studying the "history" in a user's profile). Further, the approximate location may be refined by examining "favorite" locations bookmarked by the mobile device user, and determining if any "favorite" locations are in the vicinity of the approximate device location.

Additionally, to utilize new carriers or to modify existing carriers in the system, a new adapter is merely added. The API remains the same from the application developer's view and a new version of the entire system does not need to be deployed. Thus, new adapters may be dynamically deployed and used in the invention.

Further, intelligent reasoning of the user's current location, and activity profile (or intent) helps to filter out unnecessary content, improving the wireless access cost, time, and performance. One or more embodiments of the invention utilize a branch of artificial intelligence referred to as fuzzy logic reasoning to make intelligent guesstimates about the user's current location, and also inferring the intent of the user's current activity profile (e.g., is the user a business visitor, close to a place of work, or a commuter in the proximity of a train station?).

The model described herein provides formal constructs for capturing vague, imprecise, overlapping, conflicting inputs. For example, the model may deal with the fact that the question "does the current user activity match a leisure visitor profile?" can yield the answer "likely yes" or "uncertain" verses a pure "yes/no" answer. Similarly, the model can account for the fact that the current activity may match both a business visitor profile and a leisure visitor profile.

Inputs may include spatial, temporal (time related), spatio-temporal (velocity vector) and activity profile indicators. The model provides membership functions that translate natural language descriptors (i.e., the inputs) that determine the magnitude of participation of the input (e.g., perhaps = 0.4, likely = 0.6, very likely = 0.8).

Further, the model can represent the current understanding of the problem in the form of an intuitive, human-language, rule base that relates the input to output. For example, a rule may be in the form "if X and Y, then Z" (e.g., if it is cloudy and overcast, then it might rain). The rule base containing all of the rules can be easily configured to reflect regional, social, or demographic trends (e.g., account for the shutdown of establishments during siesta period in Central America).

An inference engine processes the rules by applying them to the inputs based on the membership function evaluations and provides a definite answer as a refined location. This answer can be single refined location or a list of candidates as requested by the application.

As a result, a user's current location may be reasoned, inferred, and classified into one of several "activity profiles". This in turn, enables an application to enhance the value of the vast amount of profile information accumulated by the wireless carriers and improves the value of the service offered to the consumer, by personalizing both the applications and the content delivered to the wireless device.

Once the location has been refined, location based services may be customizable based on the profile/personal information of a user. To customize location based services in the prior art, databases maintained by carriers were often copied locally and frequently reloaded to ensure that the data remained accurate. In one or more embodiments of the invention, a foreign/external database may be accessed by an application while the full records remain in the database and are not copied locally.

Embodiments design and implement a compact LBS bridge to external profile databases. The LBS bridge comprises a compact definition of the schema of the external database (including the name of the attributes, the types, and the constraints). The LBS bridge also comprises data source information (e.g., how to connect and communicate with the external database) and an SQL statement that will extract the properties from the data source corresponding to the schema definition. Records in the external data source are identified by storing the foreign keys for each record in a table within an LBS database. In addition, positional information from the external record is extracted/obtained and stored in the table as a geocoding index (thus making the external database LBS enabled). The collection of the services are then made available in the form of an external application programming interface for system integrators.

As a result of the LBS bridge, location based services can extend to the large amount of profile information accumulated by wireless carriers, phone companies, etc. which in turn makes their services more personalized and valuable to the end user. Thus, embodiments of the invention location enable user profile information in external databases, portals, etc. and allow the seamless provision of location services using both internal and external profile information.

## BRIEF DESCRIPTION OF THE DRAWINGS

Referring now to the drawings in which like reference numbers represent corresponding parts throughout:

FIG. 1 illustrates an approximate location and an error polygon representing imprecision in the location;

FIG. 2 schematically illustrates a hardware and software environment utilized in accordance with one or more embodiments of the invention;

FIG. 3 illustrates a simple representation of an architecture that supports a device locator in accordance with one or more embodiments of the invention;

FIG. 4 illustrates location data modeled as an arc in accordance with one or more embodiments of the invention;

FIG. 5 is a flow chart that illustrates the use of an application programming interface in a mobile device locator adapter system in accordance with one or more embodiments of the invention;

FIG. 6 illustrates a refined location as the fuzzy centroid of weighted inputs in accordance with one or more embodiments of the invention;

FIG. 7 outlines the fuzzy logic reasoning process in accordance with one or more embodiments of the invention;

FIG. 8 is a flow chart illustrating the use of fuzzy logic reasoning to refine a device location in accordance with one or more embodiments of the invention;

FIG. 9 illustrates the structure of a schema for an external database in accordance with one or more embodiments of the invention;

FIG. 10 illustrates a user profile manager in accordance with one or more embodiments of the invention; and

FIG. 11 is a flow chart illustrating the use of a location based services bridge to external data sources in accordance with one or more embodiments of the invention.

## DETAILED DESCRIPTION OF THE PREFERRED EMBODIMENTS

In the following description, reference is made to the accompanying drawings which form a part hereof, and in which is shown, by way of illustration, several embodiments of the present invention. It is understood that other embodiments may be utilized and structural changes may be made without departing from the scope of the present invention.

### Overview

An API allows location based service applications to determine the location of a device regardless of the mobile device carrier. Specifics of the carrier's positioning server, mobile device identification method, and protocol are handled internally by the methods of the API. Accordingly, the application is insulated and the specific details of a carrier are transparent. Further, using heuristics, a device's approximate location may be refined.

Additionally, one or more embodiments of the invention provide a method for using fuzzy logic reasoning to refine the approximate location of a device. Various imprecise inputs are processed by membership functions and assigned three truth values along an interval [0,1]. The truth values define the magnitude of participation of the inputs in rules. An inference engine then processes the inputs in accordance with the truth values through a rule base that comprises one or more rules. Each rule has an antecedent that may utilize the truth values and a consequent that specifies a refined location. The rules produce logical products (within an interval from 0 to 1) for each rule that define the truth value for the consequents. A method is then used to select the appropriate refined location based on the logical products.

Further, using an application programming interface (API), an LBS bridge is created that contains the definition of a schema of an external database, data source information that describes how to connect and communicate with the external database, and a database query statement that upon execution extracts properties from the external database corresponding to the schema definition. Positional information and a foreign key for each record in the external database are stored in a table and used to determine which records are within a desired locale and need to be retrieved to provide a customized location based service. Once identified, the key in the table is used with the database query statement and the information set forth in the schema definition to retrieve desired information from the external database. Accordingly, the LBS bridge provides a method, apparatus, and article of manufacture for accessing a user's personal information through an application programming interface.

Hardware Environment

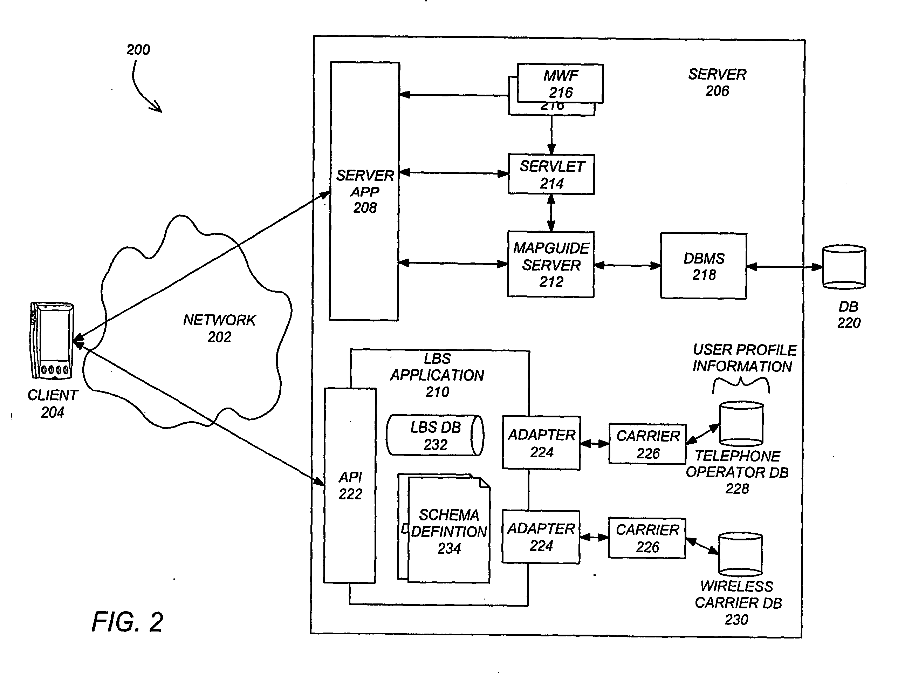

FIG. 2 schematically illustrates a hardware and software environment utilized in accordance with one or more embodiments of the invention. A typical distributed computer system 200 uses a network 202 (such as the Internet) to connect technicians utilizing mobile device clients 204 (e.g. a cellular phone, PDA, WINCE, or PALM device) or desktop clients (e.g., a computer system running a browser) to server computers 206.

A mobile device client 204 may include any type of mobile device such as handheld personal computers (HPC), palm-held personal computers (PPC or PDA), cellular phones, smart phones, etc. However, embodiments of the invention may be implemented on desktop clients as well. Hereafter, mobile device clients 204 and desktop clients may be used interchangeably and refer to all types of clients/client computer systems. A typical combination of resources used in system 200 may include a network 202 such as a cell phone network, the Internet, LANs, WANs, or the like, mobile devices 204, desktop clients, and servers 206 that are personal computers; workstations, minicomputers, or mainframes.

The network 202 connects mobile device clients 204 or desktop clients executing the appropriate software applications to server computers 206. Server computers 206 may execute a variety of applications including a server application 208 (e.g., a Web server), an LBS application 210, MapGuide server 212, and/or servlet 214. MapGuide servers 212 and servlets 214 may be located within or part of server application 208. The server 206 and its components may also be referred to as a back office system. Such a back office system maintains access to corporate databases, synchronization utilities, etc. The server application 208 is typically a program such as a UNIX Apache Web server or Microsoft's Internet Information Server. The servlet 214 may communicate with a client 204 through server application 208 such that any additional processing required by a client 204 may be performed by the servlet 214.

In a geographic information system (GIS) offering location based services, servlet 214 may communicate with MapGuide server 212 to obtain needed map data/information. Additionally, servlet 214 may access map windows files (MWF) 216 to obtain relevant data. MapGuide server 212 (or another application) may also interact with a database management system (DBMS) 218 that may be utilized to retrieve relevant geographical data (such as SDF [Spatial Data Files] data [a special data format for delivering large amounts of data quickly over an intranet or the Internet], raster data, Open DataBase Connectivity (ODBC) data, etc.) from database 220.

Further, client 204 may interface with LBS application 210 through an application programming interface (API) 222 that provides a uniform interface for determining a location of device 204 and providing additional location based services. To determine the location of client device 204, the LBS application may utilize one or more adapters 224 for each of the different protocols of various mobile device carriers 226. The carriers 226 may also maintain user profile information in one or more databases 228-230. As described above, the LBS application 210 may also maintain an LBS database 232 (e.g., for the local storage of information). In the prior art (as described above) the user profile information is often reloaded into the LBS database 232.

The LBS application 210 may implement a compact LBS bridge to the external databases 228-230. To implement the LBS bridge, the LBS application 210 maintains a compact definition 234 of the schema of each external database 228-230. The schema is described in detail below. Further, the API 222 may provide an interface for refining the location of a device using fuzzy logic.

Generally, components 204-234 all comprise logic and/or data that is embodied in or retrievable from a device, medium, signal, or carrier, e.g., a data storage device, a data communications device, a remote computer or device coupled to the computer via a network or via another data communications device, etc. Moreover, this logic and/or data, when read, executed, and/or interpreted, results in the steps necessary to implement and/or use the present invention being performed.

Thus, embodiments of the invention may be implemented as a method, apparatus, or article of manufacture using standard programming and/or engineering techniques to produce software, firmware, hardware, or any combination thereof. The term "article of manufacture" (or alternatively, "computer program product") as used herein is intended to encompass logic and/or data accessible from any computer-readable device, carrier, or media.

Those skilled in the art will recognize many modifications may be made to this exemplary environment without departing from the scope of the present invention. For example, those skilled in the art will recognize that any combination of the above components, or any number of different components, including different logic, data, different peripherals, and different devices, may be used to implement the present invention, so long as similar functions are performed thereby.

Mobile Device Locator Adapter System

A device locator application may be executing on a client 204 or a server 206 to determine the location of a specific mobile device client 204. A device locator application may be executing on a client 204 or a server 206 to determine the location of a specific mobile device client 204. To determine the location of a mobile device client 204, a device-specific identification is provided to the device locator. For example, a mobile subscriber international subscriber directory number (MSISDN) (the directory number [e.g., the GSM - global system for mobile communications number] or the number one dials to connect to a GSM subscriber) may be provided to a device locator application 210. Such an MSISDN may be encoded in a cookie in a wireless application request. Alternatively, a device may be identified by an Internet protocol (IP) address encoded in a request header or may be identified by a pre-stored default in the user profile database 228-230.

The resulting location provided by the device locator 210 contains the coordinates of the device 204, the device's 204 spatial reference system (SRS), and information regarding the precision of the coordinates.

The device locator 210 provides an interface 222 for accessing the network-provided location of a device 204. For devices 204 that provide their own location (such as via a SIM card), the application developer already has the coordinates of the device 204 and does not need to use the device locator 210.

The device locator 210 provides users with a unified API 222 for determining the location of devices 204. The device locator 210 retrieves the location of devices 204 from third-party location determination technology (LDT) providers 226, each of which may support different protocols (e.g., HTTP, HTTPS, etc.). LDT is a general term that describes a carrier network based service that provides device 204 location information to internal and external systems. LDT adapters 224 may be supplied by specific carriers 226 and may be utilized to provide the location information. Any location obtained from a source other than the supplied LDT adapters 224 may still be used throughout GIS applications in any application programming information (API) call that requires a location parameter. As described above, LDT providers/carriers 226 may each support different protocols that may vary with respect to the format of the request, the format of the response, and the accuracy of the response. Some services may only provide a geographic region that the mobile system is within, while others may provide specific coordinates.

The device locator interface (i.e., the API) 222 insulates application code from the specific APIs of individual LDT providers 226. Application developers do not need to understand provider APIs or protocols. Instead, an LDT adapter 224 translates specific provider APIs into a generic API 222 that is presented to the application as the device locator 210. The LDT adapter 224 therefore insulates the application from differences in protocols like hypertext transfer protocol (HTTP), secure hypertext transfer protocol (HTTPS), etc. Such an architecture may also support additional LDT providers 226 in the future without changing the application API 222. An LDT adapter 224 simply needs to be written for the new LDT provider 226.

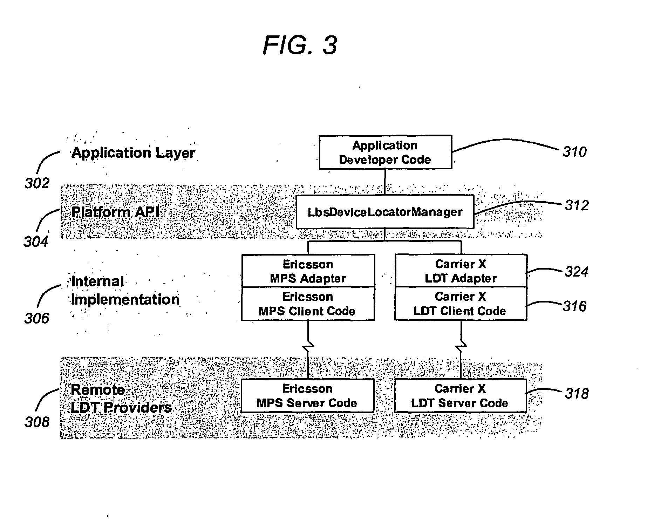

FIG. 3 illustrates a simple representation of an architecture that supports a device locator 210 in accordance with one or more embodiments of the invention. As illustrated, the architecture has several layers 302-308. Application code 310 in application layer 302 interfaces through the uniform API 222 with a device locator 312 (e.g., LbsDeviceLocatorManager) in the platform API layer 304 to obtain location information for a device 204.

The device locator 312 interfaces with individual carrier protocols set forth in specific carrier LDT adapters 224 in internal layer 306 to retrieve location information using carrier specific implementations. The carrier LDT adapters 224 interact with client code 316 that communicates with server code 318 in the remote LDT provider layer 308.

To query the location of a device 204, the application code 310 retrieves an instance of a device locator object 312 (e.g., LbsDeviceLocatorManager). The application code 310 may then use the device locator 312 to obtain the location of a device 204 given a device's id. As described above, the format of device ids may vary according to the LDT implementation. If a query for the location of a device 204 fails, the device locator 312 may generate an exception.

If the query is successful, a location object may be returned to application layer 302. As described above, the resulting location object may contain a Point/Coordinate object containing the coordinates representing the device's location, an SRS object that describes the associated spatial reference system, and a Precision object that describes the precision of the coordinates.

In one or more embodiments of the invention, a device locator manager provides the API 222 and delegates calls to specific getLocation() methods implemented for/by individual carriers 226. To ensure that the individual carriers 226 implement such a getLocation method, an interface (e.g., a devicelocator interface) may be implemented by all specific device locator adapters 224.

Ericsson™ Implementation

As described above, various adapters 224 may be utilized by the LBS application 210. Each adapter 224 may be configured for a particular cellular carrier 226. The following description is specific for supporting an implementation for an adapter 224 implemented for Ericsson™. For the Ericsson™ implementation, the device id is represented as an MSISDN.

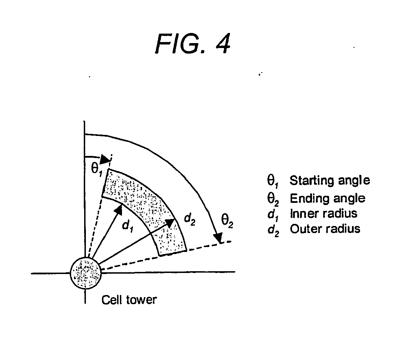

The Ericsson™ implementation locates the device 204 within a cell and can determine its approximate distance from the cell tower. A cell is a geographic area surrounding or immediately adjacent to a base station. This location data may be modeled as an arc as shown in FIG. 4. The Point object returned (e.g., as part of the location object) represents the geometric center of the arc, and the application layer 302 may retrieve the inner and outer radii $d_1$ and $d_2$. Further, angles $\theta_1$ and $\theta_2$ are in degrees and are measured clockwise from due North.

If the device locator 312 fails to determine the location of a device 204, it will retry the request a predetermined/specified number of times. If, after the specified number of retries, the device locator 312 still fails to determine the location, an exception is thrown. Typically, exceptions occur when interfacing with the LDT provider 226/adapter 224. If the LDT provider 226 generates the exception, then any additional information provided by the provider 226, such as error codes and messages, may be written to an errror log file.

One can determine that an exception was thrown by the device locator 312 by comparing its error code to a list of error codes. The following tables describe the error codes returned by an Ericsson™ implementation, that will appear in an error log file. In the tables, the term coordinate system refers to a system for specifying a location. The Ericsson™ Mobile Positioning Protocol (Ericsson™ MPP) refers to an HTTP/HTTPS-based specification developed by Ericsson for interfacing with a mobile positioning center. IDMSO refers to a format for specifying latitude or longitude, where I is a letter indicating the cardinal direction, D is degrees (2 or 3 digits), M is minutes (2 digits), S is seconds (2 digits), and 0 indicates no decimals (e.g., E153806 or N603758). Additionally, Mobile Positioning Centre (MPC) is the term employed by Ericsson™ to describe a positioning gateway that enables applications to access mobile station position information. Further, Mobile Positioning System (MPS) is the term employed by Ericsson™ to describe the implementation of their MPP for LDT. The error codes represent version 3.0 of the Ericsson™ MPS SDK.

Table 1 - Ericsson™ General Error Codes

| Error Code | Description |
|---|---|
| 0 | No error. |
| 200-299 | Syntax error. |
| 300-399 | Authentication error. |
| 400-499 | Authorization error. |
| 500-599 | Positioning error. |
| 600-699 | Network error. |
| 9999 | Internal MPC error. |

Table 2 - Ericsson™ Syntax Error Codes

| Error code | Description |
|---|---|
| 200-299 | Syntax error. Syntax error is always described with a text slogan. |

Table 3 - Ericsson™ Authentication Error Codes

| Error Code | Description |
|---|---|
| 300 | Access denied. Invalid Password or Client Id or the LCS client is not activated. |
| 399 | Authentication error, other. |

Table 4 - Ericsson™ Authority Error Codes

| Error Code | Description |
| --- | --- |
| 400 | Request type not allowed for client. |
| 401 | MSISDN specified in the request not allowed to be positioned by the client. |
| 499 | Authority error, other. |

Table 5 - Ericsson™ Positioning Error Codes

| Error Code | Description |
| --- | --- |
| 503 | Congestion. It is not possible to execute the positioning request at the requested time or times due to heavy usage of the MPC. |
| 504 | Conversion to correct geodetic datum failed. |
| 505 | Positioning of the MS failed, probably due to missing cell data. |
| 506 | Positioning of the specified MSISDN is not allowed at the moment. |
| 599 | Positioning error, other. |

Table 6 - Ericsson™ Network Error Codes

| Error Code | Description |
| --- | --- |
| 600 | The specified MSISDN in not known to the network. |
| 601 | The specified MSISDN is not available for positioning. This occurs for example if the MS is detached. |
| 602 | The specified MSISDN is not reachable for positioning at the moment. This occurs for example if the MS out of radio coverage. |
| 603 | Positing failed due to network reasons. |
| 699 | Network error, other. |

Table 7 - Ericsson™ MPS 1.1 Error Codes

| Error Code | Description |
| --- | --- |
| 0 | No error. |
| 100 | No parameters were supplied with the request. |
| 101 | The POSITION_TIME parameter is missing in the request. |
| 102 | The POSITION_TIME parameter is missing in the request. |
| 107 | Access denied. The user does not exist or the supplied password is incorrect. |
| 110 | The parameter GEODETIC_DATUM was specified in the request but was not assigned any value. |
| 111 | The parameter COORDINATE_SYSTEM was specified in the request but was not assigned any value. |
| 112 | The parameter POSITION_FORMAT was specified in the request but was not assigned any value. |
| 113 | The parameter GMT_DIFFERENCE was specified in the request but was not assigned any value. |
| 114 | The parameter POSITION_DELAY was specified in the request but was not assigned any value or the assigned value was not a numeric string. |
| 1001 | Access denied. The specified request is not authorized to execute. |
| 1002 | Invalid syntax for the supplied POSITION_ITEM value. This can also indicate that too many position items have been specified. |
| 1003 | Invalid syntax for the supplied POSITION_TIME value. This can also indicate that too many position times have been specified. |
| 1004 | The supplied request will generate too many positions and has thus been rejected. |
| 1005 | The MPC has problems contacting the network. |
| 1006 | The PP the MPC uses for the request has an internal error, due to this the MPC cannot execute the request. The MPC may be missing cell data in its internal cell database. |
| 1007 | The specified MS is not available for positioning. This occurs for example if the MS is detached. |

(continued)

| Error Code | Description |
|---|---|
| 1008 | The request has passed its specified positioning time. This can be due to heavy load on the MPC and due to POSITION_DELAY being set to a too small value. |
| 1009 | The network claims that there is an error in the MS. |
| 1010 | Congestion. The MPC is unable to execute the positioning request at the requested time or times due to currently heavy usage of the MPC. This can beo overcome by increasing the allowed positioning delay value (see Available MPP parameters on page 4). |
| 9999 | The request cannot be executed due to an internal error in the MPC. |

Adapter System Flow

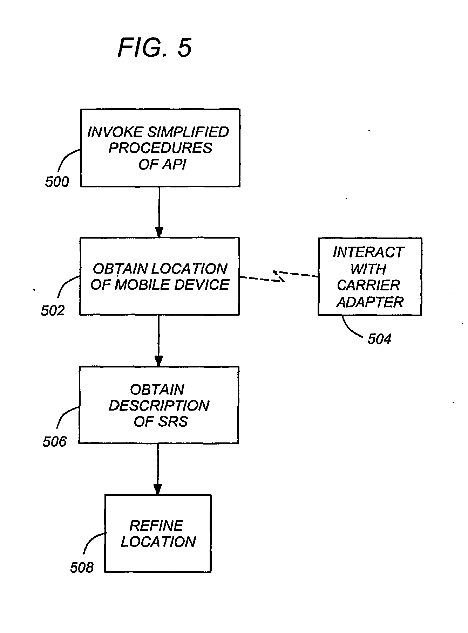

FIG. 5 is a flow chart that illustrates the use of an API in a mobile device locator adapter system 200 in accordance with one or more embodiments of the invention. Referring to both FIG. 2 and FIG. 5, in the mobile device locator adapter system 200 an application program 210 (i.e., a device locator) may be dynamically deployed within a computer system 200 without deploying a new version of the computer system 200.

Once the application program 210 has been deployed, simplified procedures of an API 222 of the application program 210 may be invoked at step 500. The simplified procedures obtain the location of the mobile device 204 at step 502 (e.g., using an identification of the mobile device 204). To obtain the location, the invoked procedures interact with the carrier adapter 224 at step 504. Since the carrier adapter 224 is customized for a particular carrier 226, specific information and methods may be utilized. For example, the invoked procedures may interact with the specifics for a mobile positioning server of the carrier 226 and different methods of identifying the device 204 as required by the carrier 226. Additionally, the invoked procedures may obtain the spatial reference system associated with the location of the device 204 at step 506.

The location of the mobile device 204 obtained at step 502 may comprise a cellular phone number, an MSISND, an Internet protocol address encoded in a request header or a pre-stored default. Further as described above, by interacting with one or more carrier adapters 224 at step 504, the invoked procedures interact with different protocols provided by the carriers 226.

Once the location has been obtained at step 506, the location may be further refined at step 508. To refine the location, one or more heuristics may be applied. For example, the location may be snapped to a closest point on a street network, to a landmark or point of interest in the vicinity, to a location in the vicinity of the location the mobile device user has recently visited (by examining the user's "history"), or to a location in a vicinity of the location that the mobile device user has bookmarked as a "favorite" location. Alternatively, fuzzy logic may be used to refine the location of the device 204.

Location Refinement

Once a location for a device 204 has been obtained, one or more embodiments of the invention may refine the approximate location by applying several heuristics and/or by applying fuzzy logic. A user or application may specify when such a location refinement is to occur. For example, a boolean "REFINE" value may be set to TRUE if refinement is desired. Accordingly, once a location is identified (as described above), the boolean value may be examined to determine if further refinement should be performed.

A user may be permitted to specify the desired methodology for refining the location of a device 204. Such different methodologies my be specified by configuring a set of rules used in the refinement process. Further, such rules may be stored in a table in a rule configuration file. The different methodologies may include snapping the location to the closest point on the street network, a landmark, or a "point of interest" in the vicinity. Alternatively, the application may look for locations in the vicinity of the approximate location that the mobile device user has recently visited (i.e., studying the "history" in the user profile) and snapping the location to a particular location (e.g., the closest location last visited). Further, the application may examine "favorite" locations bookmarked by the mobile device user and determine if any such "favorite" locations are in the vicinity of the approximate device location. The approximate location may then snap to the closest "favorite" location. Further, fuzzy logic may be utilized to refine the location as described in detail below.

For example, in a simple approach to location refinement, the geometric centroid of a precision polygon shape f(x,y) is defined by:

$$x = \text{DoubleIntegral}\ (x\ dx\ dy)\ /\ \text{DoubleIntegral}\ (dx\ dy);$$

and

$$y = \mathrm{DoubleIntegral}\ (y\ dx\ dy)\ /\ \mathrm{DoubleIntegral}\ (dx\ dy)$$

Using such a definition for a geometric centroid, trivial refinement of a precision polygon (e.g., polygon 102) is provided. However, the centroid does not really refine the location. Nonetheless, such a centroid may offer the best average error for a uniform distribution of the true location within the precision polygon 102.

In another example of location refinement, a user's profile and regional content is used to influence the refinement. In such refinement, a wireless carrier 226 profile database 228-230, a wireless portal (e.g., an adapter 224) and a local user profile database (e.g., LBS database 232) will together have access to very specific user profile information. Such access may be provided as described in co-pending and commonly assigned United States Patent Application Serial No. 10/034,440, entitled "LOCATION BASED SERVICES BRIDGE TO EXTERNAL DATA SOURCES", by Nemmara Chithambaram, et. al., Attorney Docket No. G&C 30566.204-US-01, filed on December 26, 2001.

This information may get progressively richer and more precise with increased usage of LBS services or an LBS application 210. The data obtained through further use of an LBS application 210 may offer insights related to the user's general demographic, ethnic classification, the user's locational pattern (e.g., home, office, favorite locations), and/or the user's "current activity profile" based on the history of locations visited recently and/or recently executed queries (e.g., "find closest museum").

Further such profile information may also be used to answer questions such as whether the user in the vicinity of a bookmarked favorite location or whether the user in the vicinity of a location recently recorded in the location history. If one of these conditions turns out to be true, a favorite location or a location in the user profile location history as a candidate for the refined location may be easily offered.

However LBS services are more commonly used when the user is away from home or work, and often in an unfamiliar area. In such cases, a prominent landmark(s) or point(s) of interest in the vicinity may be offered as candidates for the refined location(s). Further, the category of landmark or point of interest selected could depend on "intelligently guessing" the user's "current activity profile" based on inputs from the user profile and local content database 232. Such inputs may comprise a combination of locational aspects (e.g., where are the user's favorite routes), activity profile indicator(s) (e.g., is this is a business visitor? Or the last finder query was "find closest museum"), and/or a temporal aspect (e.g., how late are the typical visitor attractions open in this region?)

Additionally, a user's preferences may be inferred to deliver highly personalized services tailored to a user. For example, everything from application behavior to stylizing for the filtering of content may be personalized for a particular user.

To refine the approximate location of a device 204, a location refinement manager may be utilized. The location refinement manager may be the initial point for location refinement, and a method of the location refinement manager may return a single refined location (e.g., a best guess), a sorted list of refined candidate locations, or several lists of refinement candidates classified by source (e.g., user profile favorites, user profile history, visitor landmarks, etc.). Each list of refined locations may be based on the particular refinement performed. For example, one list may be based on favorites, a second list may be based on the history, while a third list may be based on landmarks. Further, each list may be sorted based on their distance from the centroid or approximate location.

Once the list of lists of refined locations is obtained, a user may interact with the LBS application 210 to compute the user's exact location. This interaction may for example include a simple confirmation of the refined location, allow selection from the candidate list, or the use of one or more candidate locations to orient and locate the user's true location. Further, during this process, all of the lists may be resolved into a single list. For example, each location in each list may be combined into a single list sorted by distance from the centroid. Additionally, the individual lists or single resolved lists may be filtered such that only locations within a specified polygon are returned. Further, based on the individual lists or single resolved list, a single refined list may be returned. Accordingly, depending on the implementation of the location refinement manager, the user may be presented with a single refined location, a list of refined locations, or a list of lists of refined locations. Nonetheless, the location refinement manager permits the approximate location of a device 204 to be refined based on various factors that may be selectable by a user.

Fuzzy Logic Refinement

One or more embodiments of the invention provide a method, apparatus, and article of manufacture for refining a device location using fuzzy logic. The fuzzy logic refinement process may be initialized by the location refinement manager.

Many reasons exist for utilizing fuzzy logic to refine a device's location. To provide the most benefit, some questions and information may be necessary. For example, necessary information may include whether the current activity profile matches a commuter profile, a business visitor profile, a leisure visitor profile, more than one of these profiles, or none of the profiles. However, many problems may arise with answering such questions. For example, the definition of the problem may be vague. In other words, the problem may be ill suited for precise quantitative definition (non-quantitative terms such as in the vicinity of, close to, far away from, likely, etc. may be frequently used). Also, it may be difficult to determine when a certain category of landmarks for the refined location should be used (subjective question). Additionally, boundaries may be blurry. For example, the answer to the question, "Does the current activity match the profile of leisure visitor?" could be "May be" or "Uncertain" vs. a "Yes/No". Further, inputs may be imprecise, conflicting, and/or overlapping. For example, the current activity profile could represent a business visitor spending an evening of leisure.

These problems call for a system that manages the vagueness, imprecision and blurry boundaries intrinsic to the input. Further, a system should formalize how such imprecision and conflicting information will be captured and processed, allow the progressive reflection of an increased understanding of the problem (with increased usage and deployments), and offer a definite conclusion.

One or more embodiments of the invention utilize a branch of artificial intelligence (AI) referred to as fuzzy logic to solve such problems. Fuzzy logic is a superset of conventional (Boolean) logic that has been extended to handle the concept of partial truth -- truth values between "completely true" and "completely false".

With fuzzy logic, continuous truth values are permitted such that system variables may take a continuous range of truth-value memberships in the interval [0,1], rather than strict binary (True or False) decisions and assignments. For example, if it is cloudy and overcast, the statement "it is raining" could have a True value of 0.8, and a False value of 0.25. Likewise, the statement "The current user is a visitor" has the value 0.9 if highly likely, 0.1 if highly unlikely, and 0.5 if the answer is "may be".

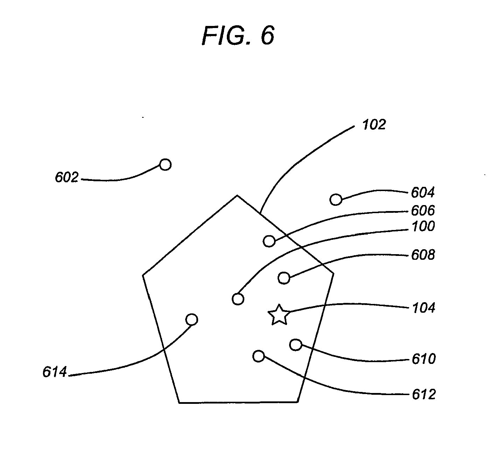

Using fuzzy logic, the location refinement problem may be redefined. Such a redefinition of the problem may be depicted in FIG. 6 that illustrates a refined location as the fuzzy centroid of weighted inputs. In FIG. 6, the location precision polygon 102 contains a geometric centroid 100 given as the approximate device 204 location. The refined location 104 may be selected from a variety of different possibilities 602-614. However, the various different possibilities 602-614 may be weighted and combined to determine a refined location as the fuzzy centroid 104.

Various fuzzy membership sets 602-614 may be utilized and weighted to refine the location. Different types fuzzy membership sets 602-614 may be utilized in the weighting calculation. For example, fuzzy membership sets 602-614 may be utilized for proximity to various categories of user profile locations (e.g., the closest user profile favorites 602, user profile history 604, etc.). Additionally, fuzzy membership sets 602-614 may describe the current activity (e.g., business visitor profile, commuter profile, leisure visitor profile, etc.), and by extension, weighted proximities to different kinds of landmarks (e.g., the closest lodging landmark 606, the closest visitor landmark 608, the closest business landmark 610, the closest street intersection 612, the closest commuter landmark 614, etc.).

Based on the fuzzy membership sets, the refined location may be inferred as a fuzzy centroid 104 of these weighted inputs.

The fuzzy logic reasoning of the present invention permits a variable number of imprecise inputs such that any number of precise or imprecise inputs/input sensors are allowed. For example, one or more of the following may be used as input sensors to refine a device's locaiton: proximity to favorites, business visitor profile indicator, leisure visitor profile indicator etc.

The fuzzy logic reasoning of the invention includes a rule-base that defines a set of (intuitive) rules that define input/output relationships in the form:

If X an Y then Z

If X and Y then Z For example, one or more of the following rules may be defined within a rule base of the invention: If (close to local favorite location) then ClosestFavorite; or If (far away from favorites) and (current activity matches visitor landmark) then ClosestVisitorLandmark.

Membership functions define the magnitude of participation of each input in determining the location. For example, a membership function may evaluate the question of whether the current activity profile matches a leisure visitor profile. An answer of "most likely" results in a higher membership function and a greater participation in location determination, vs. an answer of "could be".

Lastly, the fuzzy logic reasoning of the invention includes an inference engine that computes the logical product of each of these rules. For example, an inference engine may determine the logical product as:

$$X \text{ AND } Y = MIN\,(X, Y)$$

$$X \text{ OR } Y = MAX(X, Y)$$

The logical product is then combined to produce the final answer.

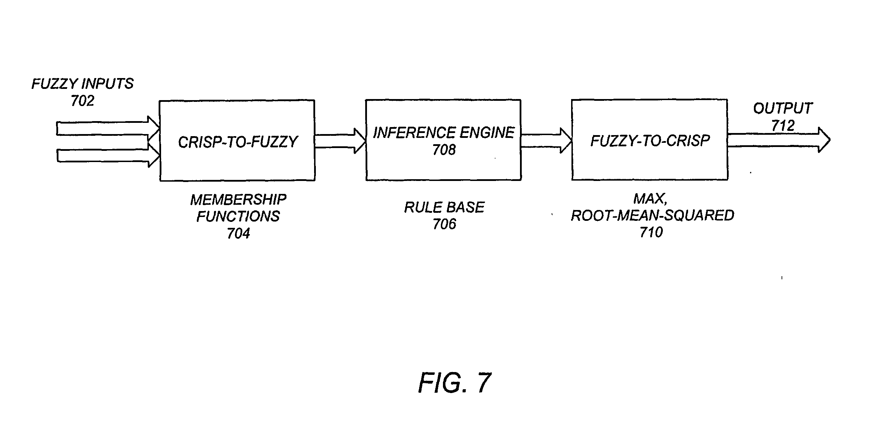

FIG. 7 outlines the fuzzy logic reasoning process in accordance with one or more embodiments of the invention. As illustrated, fuzzy inputs 702 (i.e., a variable number of imprecise inputs) are processed by one or more membership functions 704 that define the magnitude of participation of each input 702. Subsequently, a rule base 706 (containing one or more rules) is processed by an inference engine 708 where the logical product for one or more rules are computed. The logical products provide the level of truth (i.e., a value in the interval [0,1]) for each rule. The inference engine then selects the refined location using one or more different methods. For example, the maximum logical product or root-mean-squared values 710 may be utilized to determine the appropriate final output 712 (i.e., refined location). Thus, fuzzy inputs 702 go from a crisp form to a fuzzy form (when processed by membership functions 704) where they are processed by an inference engine 708 that identifies logical products that are then processed back into a crisp form by using a desired methodology 710 for selecting the appropriate logical product and the corresponding refined location for output 712.

Three types of input sensors (fuzzy inputs 702) may be utilized: location or proximity based, time based, and activity profile based. Location or proximity based inputs 702 determine the proximity to particular locations. For example, location based inputs 702 may include favorites (e.g., proximity to user profile favorites like home, office, health club, etc.) and history (e.g., proximity to recently visited locations in the user profile history).

Activity profile based inputs 702 are evaluated to determine whether the current user's activity matches or is similar to a particular established profile. For example, established profiles may include a business visitor activity profile (e.g., does the current activity match the profile of a business visitor?), a leisure visitor activity profile (e.g., does the current activity match the profile of a leisure visitor?), and a commuter activity profile (e.g., does the current activity match the profile of a commuter?).

Temporal inputs 702 are based on whether the current time is within a particular temporal range or profile. For example, a business operating hour temporal input 702 may determine if the current time is within the business operating hours. Alternatively, a leisure operating hour temporal input 702 may determine if the current time is within the leisure operating hour.

Other spatio-temporal inputs 702 such as velocity vector (indicating a direction of travel) may be added/utilized as an input 702.

The fuzzy logic then processes the inputs 702 to produce an output 712. The output 712 may comprise a single value or a set of values (if multiple candidates are required). Outputs may include the closest favorite location 602, the closest history 604, the closest leisure landmark 608, the closest business landmark 610, the closest lodging landmark 606 (e.g., a hotel), the closest commuter landmark 614, the closest street intersection 612, etc.

Membership functions 704 are utilized to define the magnitude of participation of each input. In other words, a membership function 704 makes an evaluation of an input 702 and determines how much that input 702 is used in the inference engine 708.

A three-valued set may be used for each input/membership function 704: P or positive (+) for truth-values, N or negative (-) for false-values, and Z or zero (0) for values that can go in either direction or reflect uncertainty. Each set can take values from the closed set/interval [0,1].

For example, an input function LeisureVisitorActivityProfile can be fuzzified as follows:

Most likely leisure visitor → P = 0.8
Unlikely leisure visitor → N = 0.8
May or may not be (uncertain) → Z = 0.8

Similarly, P, N, and Z values may be defined for all other inputs 702 (e.g., near = P, far = N, uncertain = Z). Table 1 is an example of an input membership table that may be used to store the different values for input 702 participation.

TABLE 1

| INPUTS | N [0-1] | Z [0-1] | P [0-1] |
|---|---|---|---|
| ProximityToFavorites | | | |
| ProximityToHistory | | | |
| BusinessVisitorProfile | | | |
| LeisuxeVisitorProfile | | | |

(continued)

| INPUTS | N [0-1] | Z [0-1] | P [0-1] |
|---|---|---|---|
| CommuterProfile | | | |
| BusinessOperatingHour | | | |
| LeisureOperatingHour | | | |

The membership functions 704 populate the table with the appropriate values for P, N, and Z. Subsequent to processing the inputs 702 through the membership functions 704, the inputs 702 are processed by an inference engine 708 against a rule base 706 in accordance with the magnitude of participation (i.e., the P, N, and Z values) provided by the membership functions 704. Since the rule base 706 is merely applied by the inference engine 708, the rule base 706 can be progressively refined as more empirical data is gathered. Further, a default rule may be specified. The default rule is used if/when the inference engine 708 cannot produce a result due to conflicting rules or inputs 702. Thus, the rule base 706 is fail-safe. If the fuzzy reasoning fails to yield a result due to too many conflicting inputs 702, the default rule would be applied (e.g., answering closest street intersection if the default rule so provides).

Additionally, to experiment on the output 712 produced based on varying rules and input 702, the inclusion and exclusion of rules may be influenced for experimentation. For such experimentation, embodiments provide that the rules use logical products and that only non-zero logical products contribute to the final inference. For example, if the membership function 704 produces P, N, and Z values that are zero, the inputs 702 have no magnitude and cannot participate in the rules. Further, since logical operations are performed, if a zero value were used, the product result in a rule would also be zero (thereby producing an improper output 712). Accordingly, initializing a value of 0.0 for the P, N and Z values of a function 704, excludes the rule from contributing in as a result of the logical product rule (since 0.0 and X = 0.0).

Additionally, the number of rules, complexity of rules, and the inference engine 708 may be configured (e.g., adaptive to different parts of the world, or for a richer user profile database). Table 2 illustrates a rule base 706 table comprising rule numbers, antecedents, and consequents for a rule base 706.

TABLE 2

| Rule | If (antecedent) | Then (consequent) |
|---|---|---|
| 1. | ProximityToFavorites = P | ClosestFavorite E.g., Home |
| 2. | ProximityToFavorites = (N OR Z), **and** ProximityToHistory = P | ClosestHistory, E.g., Last location in history |
| 3. | ProximityToFavorites = (N OR Z), **and** ProximityToHistory =N OR Z, **and** BusinessVisitorProfile = P, **and** BusinessOperatingHour = P | ClosestBusinessLandmark E.g., Civic Center |
| 4. | ProximityToFavorites = (N OR Z), **and** ProximityToHistory =(N OR Z), **and** LeisureVisitorProfile = P, **and** LeisureOperatingHour = P | ClosestLeisureLandmark E.g., Stafford Lake Park |
| 5. | ProximityToFavorites = (N OR Z), **and** ProximityToHistory =(N OR Z), **and** BusinessVisitorProfile = P, **and** BusinessOperatingHour = N | ClosestLodgingLandmark E.g., The Sheraton |
| 6. | ProximityToFavorites = (N OR Z), **and** ProximityToHistory =(N OR Z), **and** LeisureVisitorProfile = P, **and** LeisureOperatingHour = N | ClosestLodgingLandmark E.g., The Sheraton |
| 7. | ProximityToFavorites = (N OR Z), **and** ProximityToHistory =(N OR Z), **and** CommuterProfile = P | ClosestCommuterLandmark E.g., Richmond Bart Station |

(continued)

| Rule | If (antecedent) | Then (consequent) |
|------|------------------|-------------------|
| 8. | ProximityToFavorites = (N OR Z), **and** ProximityToHistory =(N OR Z), **and** BusinessVisitorProfile = (N OR Z), **and** LeisureVisitorProfile = (N OR Z), **and** CommuterProfile = (N OR Z) | ClosestStreetIntersection E.g., Civic Center At McInnis |

Table 2 illustrates how the values in the input membership table (i.e., Table 1) are utilized in a set of rules. For example, in rule 3, four conditions are processed based on the inputs 702 to produce the closest business landmark. The four rules use logical AND operations to evaluate the antecedent rules. In rule 3, the closest business landmark is the consequent (i.e., the output 612) if proximity to favorites is N or Z, proximity to history is N or Z, the business visitor profile is P, and the business operating hour is P. The additional rules each have a set of antecedents/conditions that produce a particular consequent when combined.

Once the rule base 706 has been established (e.g., placed into a rule base table), the inference engine 708 is used for computing the fuzzy centroid 104. When using the inference engine 708, the logical product of each rule (e.g., rule 1 through 8 of Table 2) is processed. This processing yields a value between 0 and 1 for each rule. When processing logical products, the antecedent "X and Y and Z" is equivalent to the minimum of X, Y, and Z (i.e., MIN (X, Y, Z)). Similarly, the antecedent "X or Y or Z" is equivalent to the maximum of X, Y, and Z (i.e., MAX (X, Y, Z)). The logical product for each rule (with a value in the interval [0,1]) indicates the magnitude of participation of that rule (0 indicating no participation). The inference can use different methods of computing the weighted centroid 104 of the non-zero magnitude rules including picking the MAX, averaging or using root mean squared 710.

In one or more embodiments, the MAX rule is always utilized so that the rule with the highest logical product is selected. For example, if rule 5 (of Table 2) yields the highest logical product, say 0.9, the refined location would be the Closest Lodging Landmark.

Further, when applying rules, if multiple candidates or multiple lists are required, the first n elements from the highest 2 or 3 logical products are selected. For example, if rules 5 and 7 (of Table 2) yield the highest values, then two lists that represent the Closest Lodging Landmarks and the Closest Commuter Landmarks may be provided as refinement candidates.

Example Application of Fuzzy Logic Refinement

Example 1 (Simple)

In a simple example, the user may not be very close to any favorite locations but is very close to a location in the user's profile history. In such an example, the input membership table has the values is illustrated as Table 3.

TABLE 3

| INPUTS | N (0-1) | Z (0-1) | P (0-1) |
|--------|---------|---------|---------|
| ProximityToFavorites | 0.9 | 0 | 0.1 |
| ProximityToHistory | 0 | 0 | 0.8 |
| BusinessVisitorProfile | 0 | 0 | 0 |
| LeisureVisitorProfile | 0 | 0 | 0 |
| CommuterProfile | 0 | 0 | 0 |
| BusinessOperatingHour | 0 | 0 | 0 |
| LeisureOperatingHour | 0 | 0 | 0 |

In this example, the only rules in the rule table that yield a non-zero logical product are rules 1 and 2 as illustrated in Table 4.

TABLE 4

| Rule | If (antecedent) | Logical Product | Then (consequent) |
|---|---|---|---|
| 1. | ProximityToFavorites = P | 0.1 | ClosestFavorite E.g., Home |
| 2. | ProximityToFavorites = (N OR Z), and ProximityToHistory = P | 0.9 and 0.8 = 0.8 | ClosestHistory, E.g., Last location in history |

Using the Max rule (i.e., taking the rule with the highest logical product), rule 2 prevails and the output 712 for the refined location is the closest history (e.g., the last location in the user's history). The closest history is the expected answer:

Example 2

In this example, the user is far away from favorites, far away from history, the current activity profile suggests the user matches a business visitor profile, the current activity profile suggests that the user could also possibly match a leisure visitor profile, and the time of day is 8.00 p.m. on a weekday.
Processing these values in membership functions 704 might result in the value for the input membership function of Table 5.

TABLE 5

| INPUTS | N (0-1) | Z (0-1) | P (0-1) |
|---|---|---|---|
| ProximityToFavorites | 1.0 | 0 | 0 |
| ProximityToHistory | 1.0 | 0 | 0 |
| BusinessVisitorProfile | 0 | 0 | 0.8 |
| LeisureVisitorProfile | 0.3 | 0.5 | 0.6 |
| CommuterProfile | 0 | 0 | 0 |
| BusinessOperatingHour | 0.9 | 0 | 0.2 |
| LeisureOperatingHour | 0.2 | 0.4 | 0.7 |

The non-zero magnitude rules for these membership values, and their logical products are shown in Table 6 below:

TABLE 6

| Rule | If (antecedent) | Logical Product | Then (consequent) |
|---|---|---|---|
| 3. | ProximityToFavorites = (N OR Z), and ProximityToHistory =(N OR Z), and BusinessVisitorProfile = P, and BusinessOperatingHour = P | 1.0 and 1.0 and 0.8 and 0.2 = 0.2 | ClosestBusinessLandmark E.g., Civic Center |
| 4. | ProximityToFavorites = (N OR Z), and ProximityToHistory =(N OR Z), and LeisureVisitorProfile = P, and LeisureOperatingHour = P | 1.0 and 1.0 and 0.6 and 0.7 = 0.6 | ClosestLeisureLandmark E.g., Stafford Lake |
| 5. | ProximityToFavorites = (N OR Z), and ProximityToHistory =(N OR Z), and BusinessVisitorProfile = P, and BusinessOperatingHour = N | 1.0 and 1.0 and 0.8 and 0.9 = 0.8 | ClosestLodgingLandmark E.g., The Sheraton |
| 6. | ProximityToFavorites = (N OR Z), and ProximityToHistory =(N OR Z), and LeisureVisitotProfile = P, and LeisureOperatingHour = P | 1.0 and 1.0 and 0.6 and 0.7 = 0.6 | ClosestLodgingLandmark E.g., The Sheraton |

The highest logical products ate for rules 5 and 4. Therefore the candidates for refinements for this example will include the ClosestLodgingLandmark and the ClosestLeisureLandmark.

Advantages and Benefits

The use of fuzzy logic reasoning to refine a device 204 location deals with the many uncertainties related to both the inputs for location and refinement, and the rules used to compute the refinement. Further, fuzzy logic reasoning provides formal constructs for representing (fuzziness) imprecise/vague/ overlapping/ conflicting inputs. Also, fuzzy logic reasoning provides the best guess (for applications that want to minimize the user interaction) or several prioritized candidate lists.

Additionally, as described herein, the fuzzy logic reasoning model is adaptive. In other words, the model allows the complexity of the inference to be controlled. For example, turning down the inferences in rules 3-7, provides a simple model (that only uses proximity to favorites, locations in history, and defaults to ClosestStreetIntersection). On the other hand, the rules can be easily fine tuned to provide further information such as regional information.

The rule-base 706, and the inference engine 708 can be implemented in phases (starting with the simplest). Further, the processing allows inputs to be taken from the carrier profile databases 228-230, and the locational information to infer user preferences and influence application behavior, filtering of content, etc. The use of the carrier profile databases 228-230 helps provide highly personalized applications tailored to the user's profile and location. Additionally, the value of the profile information collected by carriers increases by using it to personalize application behavior.

Fuzzy Logic Reasoning Flow

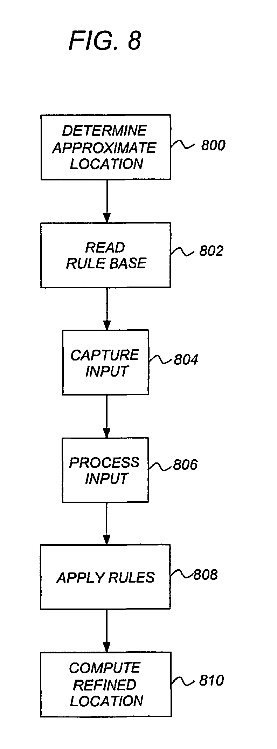

FIG. 8 is a flow chart illustrating the use of fuzzy logic reasoning to refine a device 204 location in accordance with one or more embodiments of the invention. At step 800, the approximate location of a device is determined. At step 802, a rule base 706 that comprises an ordered collection of rules is read into memory or loaded from a database (e.g., database 232). The rule base 706 may be progressively refined based on empirical data collected over time. Further, the rule base 706 may specify a default rule to use if the reasoning fails to produce a result. Additionally, the rule base 706 may be adaptable such that is may be configured to reflect regional trends, social trends, or demographic trends. Such adaptability may be user controlled wherein the user is permitted to add, delete, and edit the rule base to customize/personalize the reasoning.

The rules within the rule base 706 are defined by an antecedent with one or more conditions, and a resulting consequent Further, the antecedent may utilize or process a logical product.

At step 804, a variable number of imprecise inputs/input sensors are captured. As described above, three types of input sensors are typically used: locational, activity profile based, and temporal based. Additionally, spatio-temporal inputs may be used.

At step 806, the input is processed in one or more membership functions. Membership functions define the magnitude of participation of each input in the rules. In accordance with fuzzy logic reasoning, the magnitude of participation may be within an interval from 0 to 1 ([0,1]). The membership function may define a three-valued set for each input. Such a three-valued set may comprise a truth value, a false value, and an uncertainty value (each of which are defined along the interval [0,1]).

At step 808, the rules are applied to the input based on the magnitude of participation to produce a logical product for each rule. Using fuzzy logic reasoning of the invention, the logical product may comprise a truth value between 0 and 1 that represents the applicability of the consequent. The consequent specifies/describes a refined location (e.g., closest leisure landmark, closest lodging landmark, etc.). Accordingly, the antecedent utilizes the various input values (as processed by the membership functions) to produce a logical product that represents the truth of a consequent.

At step 810, the refined location is computed based on the logical products. In other words, now that various truth values/logical products have been specified at step 808, a determination is made as to which consequent to utilize as the actual refined location (also referred to as the weighted centroid 104). As described above, different methods of computing the refined location based on the logical products may be used. For example, the maximum logical product may be selected and the corresponding consequent may then be selected/used to determine the refined location. Alternatively, averages (e.g., a root-mean-squared calculation) may be used to refine the location. For example, the logical products may be averaged and the consequent with the logical product that is closest to the average may be selected as the refined location. Alternatively, a number of different candidate locations may be used and a location between all of those locations may be provided. However, any available method for selecting a refined location (or list of refined locations) may be used. Additionally, the refined location that is returned may either comprise a singleton (i.e., a single refined location) or a list of candidate locations that the user may select from.

Location Based Services Bridge to External Data Sources

As described above, LBS applications 210 may be highly customized for a particular user based on the user's profile information. User profile information is any data maintained per user in a relational database, portal, etc. Such user profile information may be stored locally (e.g., in an LBS database 232) or externally (e.g., in external data sources 228-230). In the prior art, external profile information is frequently reloaded into an LBS database 232 of an LBS application 210 resulting in increased cost, synchronization problems, data formatting incompatibilities, and problematic non LBS-aware data. For example, a significant amount of a user's profile information may be stored in a carrier's external database 228-230. To utilize such profile information in the prior art, all of the information is copied to an LBS service provider's local database 232. However, a carrier 226 may not permit such a copying for various reasons.

To overcome these problems one or more embodiments of the invention utilize a compact LBS bridge to external profile databases 228-230. The LBS bridge allows the data to remain in the external database 228-230 while still providing the same location based services and utilizing the data. Further, whether the data is local/internal or external remains transparent and seamless to the application (e.g., location service) and user.

The LBS bridge provides a compact definition of the schema 234 (also referred to as a data link table) of the external database 228-230 (including the name of the attributes, the types and the constraints). Within the schema, data source information (e.g., how to connect and communicate to the external database 228-230) and the SQL (structured query language) select statement that will extract the relevant properties from the data source corresponding to the schema 234 description are provided. Additionally, the SQL statement contains information about the foreign key column name that identifies the key for uniquely identify records in the external database 228-230.

Additional information used to provide location based services may be stored in the LBS database 232 in the form of a user profile property table (UPPT) (also referred to as a databridge table). The UPPT may be existing user profile information that is stored locally or may be created specifically for accessing the external data sources 228-230. Commonly, the UPPT maintains information about spatially-aware user profile items stored externally from the local data store 232. Each record in the foreign data source 228-230 is identified by storing the foreign key for the record in the LBS database 232 (in the UPPT). In addition, positional information for each external record is obtained/extracted and stored in the UPPT as a geocoding/spatial index (thus making the external database 228-230 LBS enabled). Further, if necessary, non-coordinate position information (e.g., textual street address, landmarks, etc.) may be geocoded to create the geocoding/spatial index and stored in the UPPT. Accordingly, a link/relationship is established between a local UPPT record and a record/item stored in external databases 228-230. The UPPT may contain records for every record in the external data source 228-230 or for a subset of records in the external data source 228-230.

The collection of these services are made available in the form of an external API 222 for system integrators. Such an external API 222 may also be referred to as a user profile manager. As a result of the generic LBS bridge, LBS applications 210 may extend to the large amount of profile information accumulated by wireless carriers 230, phone companies 228, etc. This extension makes LBS services more personalized and valuable to the end user.

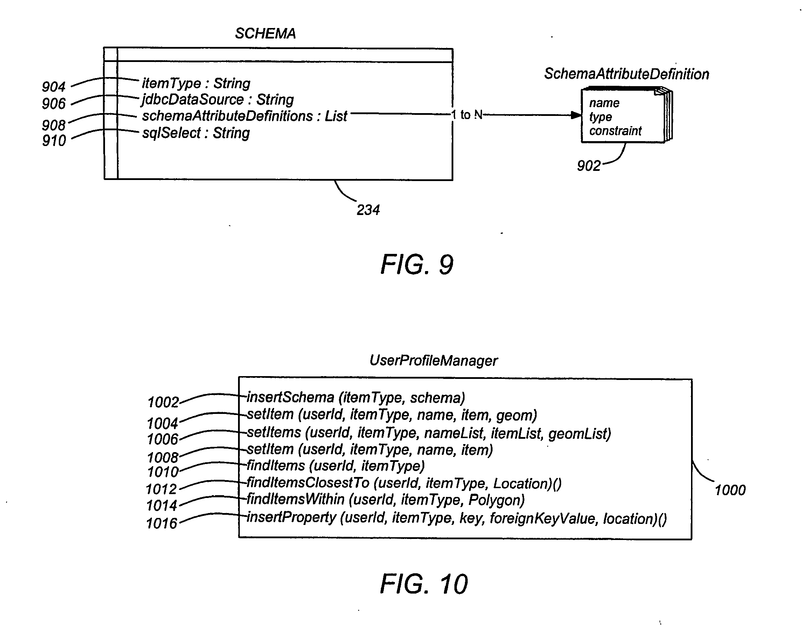

FIG. 9 illustrates the structure of a schema 234 for an external database 228-230 in accordance with one or more embodiments of the invention. As described above, the schema definition 234 maintains information about external data sources 228-230. Each schema 234 definition stored by the LBS application 210 provides a description for each object in the external database 228-230. In other words, there is a corresponding schema 234 for each object in the external database 228-230. For example, an address object in the external database 228-230 will have a corresponding schema definition 234. Further, for each field/attribute in the object, a corresponding attribute definition 902 is stored with the schema 234. For example, the address object has multiple fields/attributes such as name, number, street name, city, state, and zip. For each field/attribute, a schema attribute definition 902 is stored with the schema 234.

The type of database 904 (i.e., itemType : String; e.g., Address) in the schema 234 provides the type or a name for the object in the external database 228-230. Data source information 906 (i.e., jdbcDataSource : String) provides information regarding how to connect and communicate with the external database 228-230. Such information may fully define where the data is, including its database 228-230, its row, and its column. For example, information regarding which carrier 226 is hosting a particular database 228-230 and how to communicate with the database 228-230 is stored.

As described above, a list 908 of attributes is set forth in the schema 234. For each attribute, an attribute definition 902 provides the name of the attribute, the type of attribute and a constraint of the attribute. Thus, for each schema 234, a single list 908 maps to multiple attribute definitions 902.

An SQL select statement 910 (e.g., a "WHERE" clause) provides the command for extracting relevant properties (e.g., a row or record) from the data source 228-230. Accordingly, schema 234 contains all of the definitional information for objects in the external databases 228-230.

As described above, an API 222 (also referred to as the user profile manager 1000) may be utilized for maintaining schema 234 information, schema attribute definition 902 information, and for accessing/retrieving detailed information (i.e., user profile information) from external databases 228-230. Additionally, the API may be utilized to maintain the UPPT such as adding or deleting a particular entry from the UPPT. Further, even when maintaining the UPPT, whether the data is coming from a local data source or an external data source 228-230 remains transparent to the user.

FIG. 10 illustrates a user profile manager in accordance with one or more embodiments of the invention. To add a schema definition 234 to the system 200 so that the external database 228-230 may be accessed, the insertSchema method 1002 of the user profile manager 1000 may be utilized. An application provider or the carrier 226 may utilize the insertSchema method 1002 for this purpose. A schema definition and type information for the schema are supplied to the user profile manager 1000 to add the schema. Once a schema definition 234 has been added to the system 200, the name of the schema 234 and the schema information is added to a list of schemas 234 referred to as a foreign item type schema definition.

Table 7 illustrates a foreign item type schema definition that contains information regarding the schemas 234 that have been added to the system 200 (i.e., using the insertSchema method 1002) in accordance with one or more embodiments of the invention.

TABLE 7

| ItemType | Schema Blob (OR addn'l columns) |
|---|---|
| ADDRESS | ADDRESS SCHEMA |
| CUSTOMER | CUSTOMER SCHEMA |
| TYPE_XX | TYPE_XX SCHEMA |

As illustrated in Table 7, an address object, customer object, and type_xx object all have schema definitions 234 maintained by LBS application 210. To add an entry to the foreign item type schema definition, the insertSchema method 1002 may be used while specifying an itemType 904.

As described above the UPPT maintains information about spatially aware user profile items stored externally from the local database 232. The individual items that are maintained in the UPPT may be populated and maintained using methods 1004-1008. For example, to set a data link for an item/record to the UPPT table, one of the methods 1004-1008 may be utilized using one or more of the following parameters: a userId, type information, a name for the item, the item property value, and an optional geocoded location.

Since a location based service is being provided by the system 200, the methods 1010-1014 utilize positional information. However, objects/records within external databases 228-230 may not be LBS enabled. For example, location information (i.e., a spatial/geocoded index) may not be associated with the objects. Nonetheless, most objects stored within external databases 228-230 may have a location-like property. For example, an external database 228-230 may contain a home address of a cellular subscriber but not a spatial index that identifies the location in space of the home address.

To allow the methods 1010-1014 to utilize positional information, the positional information for each record in database 228-230 may be stored in the UPPT within the LBS database 232 using the user profile manager 1000 and methods 1004-1008. Thus, each record in the UPPT is uniquely identified by a key and contains positional information (in the form of a spatial index such as a geocoded location) for that record.

When deploying a system 200 of the invention, the spatial index may be obtained for each record of each object in the external database 228-230. This spatial index information along with a key for identifying each record are then stored in the UPPT. Alternatively, individual items/features/records within UPPT may be added or deleted with appropriate positional information as desired. Unlike the mobile device 204, the information stored in the external data source 228-230 and associated positional information changes infrequently. Accordingly, updates to the information within the UPPT do not need to occur frequently and may be scheduled in longer intervals.

Once the schema definition is initialized within system 200 and the UPPT is populated, the user profile manager 1000 may be utilized to retrieve the relevant information from the external database 228-230. Methods 1010-1014 may be utilized to find and retrieve this information.

Table 8 illustrates a user profile property table created by the user profile manager 1000 in accordance with one or more embodiments of the invention.

TABLE 8

| User ID | Type | Foreign Key Value | Geometry |
|---|---|---|---|
| John | ADDRESS | Raju | aGeocodedLocation |
| John | ADDRESS | Scott | aGeocodedLocation |
| John | ADDRESS | Tim | aGeocodedLocation |

Each row/entry of Table 8 represents a record of an address object within external database 228-230. While methods 1004-1008 may be utilized to set location properties and attributes for partial records in the UPPT, the insert-Property method 1016 is utilized to add a new entry (e.g., an address entry) to the UPPT. With the insertProperty method 1016, a user ID identifies who is entering the information and the type field indicates the type of information being entered (i.e. as set forth in the foreign item type schema definition of Table 7). The Foreign Key Value column contains the foreign key for the actual address data for that user in the external database. However, in the invention, the item values in the user profile property table are set to null, since the data is stored in the external databases 228-230. Thus, the actual address data is not stored in the UPPT.

The key identifies the unique identifier for that entry. Such a key may be set using a hash algorithm, may be set by the user, may be a combination of columns/properties, or may be set using any other methodology that can uniquely identify a record of an object in database 228-230. For example, in Table 8, the key uniquely identifies the entry by a user's name (e.g., Raju, Scott, or Tim).

The geometry field of Table 8 contains optional positional information from the external database 228-230 stored as a geocoding index. The use of such positional information makes the external database 228-230 LBS enabled thereby allowing spatial queries to be performed on the data. As described above, when the system 200 is deployed, this positional information is obtained and may be extracted from the records in database 228-230. Thereafter, the positional information is stored in the UPPT. Accordingly, the positional information comprises a location of the information stored in the external database 228-230. For example, the geocoded location may identify the location of the home address of one or more customers.

Once obtained, the location in the UPPT may then be used by an LBS service to provide highly customized services. For example, using the geocoded location of the home address of a particular customer, when the customer is traveling towards home, restaurants near the customer's home may be determined. Further, phone numbers and hours for such restaurants, or maps based on the actual home address to the restaurant may be supplied to the customer.

Using the methods 1010-1014 and the UPPT, appropriate additional and desired information (referred to as items or features) may be obtained from the external databases 228-230. The methods 1010-1014 may be used to find multiple items/features (e.g., using findItems 1010), items/features closest to a specific location (e.g., using findItemsClosestTo 1012 and specifying a Location), or items/features within a certain defined area (e.g., using findItemsWithin 1014 and specifying a Polygon that identifies an area).

For example, to find items/features closest to the current user, the LBS application may utilize the findItemsClosestTo method 1012 and supply a mobile device's 204 location. The method 1012 then reviews the UPPT geometry column to locate the closest location. Once the appropriate entries are identified, the key in the entry identifies the appropriate entry in the external database 228-230. The method may then access the schema 234 to determine how to communicate with the external database 228-230 (e.g., using jdbcDataSource method 906) and the appropriate SQL select statement to use to retrieve the information (i.e., using sqlSelect 910). The key from the UPPT is used with the SQL select statement to retrieve the additional profile information from external database 228-230.

Similarly, the findItemsWithin method 1014 allows the user to specify a polygon within which to find entries. The method 1014 examines the UPPT geometry properties to locate locations within the specified polygon. Once the appropriate entries are identified, the additional information may be retrieved from the external database 228-230 using the sqlSelect statement 910 with the appropriate keys.

Accordingly, multiple schema definitions 234 set forth the definition of each external database 228-230. To access the user profile information, the schema is added to a list of schemas (i.e., the foreign item type schema definition). When initialized, portions of a user's profile information are extracted and stored in a user profile property table. Through an API, queries may be performed to retrieve data (e.g., using standard querying mechanisms). If the data is locally available, then it is merely retrieved. However, extended properties that are not locally available are fetched internally by issuing a query (e.g., a JDBC™ [Java DataBase Connectivity] call) using the data from the schema 234 and UPPT. A JDBC™ call is an API call that allows a user to access virtually any tabular data source from the Java™ programming language. For example, the user profile property manager may be utilized to access the UPPT and retrieve additional user profile information from the external databases 228-230.

By using the user profile property table, the actual information (i.e., the item information) remains in the external databases 228-230. The SQL statement 910 may then be used to retrieve information from the specified datasource 906 when desired.

Further, by storing location information in the UPPT, location based services may be offered without retrieving all of the user profile information from the external databases 228-230. For example, if the location information identifies the location of the user, the location information may be utilized in the findItemsClosestTo method 1012 to retrieve particular locations (e.g., landmarks, etc.) nearby. Additionally, since the location of the user is known (e.g., using the locator adapter based system as described above), the known device location can be used in combination with the retrieval of additional profile information to offer customized services to the user.

Accordingly, the LBS bridge enables the extension of location based services to the large amount of profile information accumulated by wireless carriers, phone companies, etc. which in turn makes their services more personalized and valuable to the end user.

Example of LBS Bridge

An example of the use of an LBS bridge occurs when a user has an address book/contact list and other information stored in a relational database 228-230 separately from his LBS enabled data and/or locally stored user profile information. The user may desire to view, search, and locate all of his contacts in the contact list.

To provide these capabilities, a link is setup between a locally stored item and an external data source 228-230 item. Such a link may be established using the user profile manager 1000. Spatial entries (i.e., location information) for the address book items may need to be explicitly added to enable spatial queries. After establishing the link, the item is a row in the user profile property table. To access the row, a user id (login ID), item type (e.g., "addressList1") and item ID (e.g., friend1). may be used.

The external data source item remains in a row in the external data source. To access the row in the external data source, a foreign data source name (e.g., that identifies the JDBC™ data source), and an SQL select statement (e.g., that extracts the row from the data source), all of which are stored in the schema definition 134, are needed.

Using an 222 API, relational and spatial querying of all resources may be performed Since an API is utilized, it is transparent to the user whether the data is coming from a local data source (e.g., from within LBS database 232) or whether the data is coming from external data sources 228-230.

Using this system, users may be responsible for managing the schemas (and datalinks), populating the user profile property table (including spatial information for each record) and updating spatial information when necessary.

LBS Brideg Flow

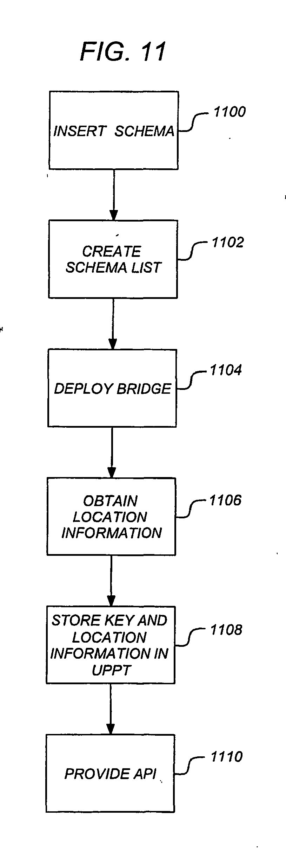

FIG. 11 is a flow chart illustrating the use of the LBS bridge to external data sources in accordance with one or more embodiments of the invention. At step 1100, a schema definition 234 is inserted into the system 200. The schema definition 234 may be inserted by a carrier 226 or any other party that desires to use an external database 228-230 in the system 200. As described above, the schema definition comprises one or more schema attributes, an SQL select statement that extracts properties from the external database 228-230 when executed, and data source information that describes how to connect and communicate with the external database. The insertion of the schema definition may also include the creation of a schema 234 list (also referred to as a foreign item type schema definition) at step 1102. Such a schema 234 list likely comprises a table with schema 234 information/definition and a name or reference for the schema 234.

At step 1104, the LBS bridge of the system is deployed/initialized. The deployment of the system comprises obtaining location information for each record of data in external database 228-230 (that is represented by a schema definition 234) at step 1106. The obtained location information and a key for each record is then stored locally in a UPPT within an LBS database 232 at step 1108. At step 1110, an API for utilizing the bridge to access information in external database 228-230 is provided.

To access the information, a method of the API is used. The method evaluates the UPPT to determine appropriate records to retrieve (based on the location information stored within the UPPT). The key for the appropriate record(s) is then used to retrieve more detailed profile information from external database 228-230. The method knows how to communicate and retrieve such information from the schema definition 234 that contains the data source information and SQL select statement

Conclusion

This concludes the description of the preferred embodiment of the invention. The following describes some alternative embodiments for accomplishing the present invention. For example, any type of computer, such as a mainframe, minicomputer, or personal computer, or computer configuration, such as a timesharing mainframe, local area network, or standalone personal computer, or an type of mobile device such as a cellular phone, laptop computer, personal digital assistant, etc. could be used with the present invention.

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

**Claims**

1. A computer implemented method for refining a location of a device (204) utilizing fuzzy logic **characterised by**:

   determining an approximate location of a device (800);
   reading a rule base that comprises an ordered collection of rules (802);
   capturing an input, wherein the input is based on a proximity to a particular user-identified favorite location (804);
   processing the input to determine a magnitude of participation of the input in the rules (806),
   applying the rules to the input based on the magnitude of participation (806), and
   computing a refined location based on the rules applied to the input based on the magnitude of participation (810)

2. The method of Claim 1, further comprising:

   gathering empirical data; and
   progressively refining the rule base based on the empirical data.

3. The method of Claim 1 or 2, wherein the rule base is configured to reflect regional trends, social trends, or demographic trends.

4. The method of Claim 1, 2 or 3, wherein one of the rules utilizes an antecedent to determine a consequent.

5. The method of Claim 1, 2, 3 or 4, wherein a three-valued set is defined for each Input, wherein the three-valued set comprises a truth value, a false value and an uncertainty value.

6. The method of any of Claims 1 to 5, wherein the refined location comprises a list of candidate locations.

7. An apparatus for refining a location of a device (204) using fuzzy logic **characterised by**:

   a computer having a memory;
   an application configured to execute on the computer, wherein the application is configured to determine an approximate location of a device (802),
   an inference engine on the computer, wherein the inference engine is configured to:

   read a rule base that comprises an ordered collection of rules (802),
   capture an input, wherein the input is based on a proximity to a particular user-identified favorite location (804);
   process membership functions stored in the memory computer, wherein the membership functions define a magnitude of participation of the input in the rules (806);
   apply the rules to the input based on the magnitude of participation and
   compute a refined location based on the rules applied to the input based on the magnitude of participation (810).

8. The apparatus of Claim 7, wherein the application is further configured to:

   gather empirical data; and
   progressively refine the rule based on the empirical data.

9. The apparatus of Claim 7 or 8, wherein the rule base is configured to reflect regional trends, social trends, or demographic trends.

10. The apparatus of Claim 7, 8 or 9, wherein one of the rules utilizes an antecedent to determine a consequent.

11. The apparatus of any of Claims 7 to 10, wherein a membership function defines a three-valued set for each input, wherein the three-valued set comprises a truth value, a false value, and an uncertainty value.

12. The apparatus of any of Claims 7 to 11, wherein the refined location comprises a list of candidate locations.

**Patentansprüche**

1. Computerimplementiertes Verfahren zum Verfeinern einer Position einer Einrichtung (204) unter Verwendung von Fuzzylogilc, **gekennzeichnet durch**:

   Bestimmen einer ungefähren Position einer Einrichtung (800);
   Auslesen einer Regelbasis, die eine geordnete Sammlung von Regeln (802) umfasst;
   Erfassen einer Eingabe, worin die Eingabe auf einer Nähe zu einer bestimmten benutzeridentifizierten, bevorzugten Position (804) basiert;
   Verarbeiten der Eingabe, um einen Grad der Beteiligung der Eingabe an den Regeln (806) zu bestimmten;
   Anwenden der Regeln auf die Eingabe, auf dem Grad der Beteiligung (808) basierend; und
   Berechnen einer verfeinerten Position, auf den Regeln basierend, die auf der Basis des Grades von Beteiligung (810) auf die Eingabe angewendet werden.

2. Verfahren nach Anspruch 1, außerdem umfassend:

   Sammeln von empirischen Daten; und
   progressives Verfeinern der Regelbasis auf der Basis der empirischen Daten.

3. Verfahren nach Anspruch 1 oder 2, worin die Regelbasis konfiguriert ist, regionale Trends, soziale Trends oder demografische Trends widerzuspiegeln.

4. Verfahren nach Anspruch 1, 2 oder 3, worin eine der Regeln ein Antezedens nutzt, um ein Sukzedens zu bestimmen.

5. Verfahren nach Anspruch 1, 2, 3 oder 4, worin eine dreiwertige Menge für jede Eingabe definiert ist, worin die dreiwertige Menge einen wahren Wert, einen falschen Wert und einen unbestimmten Wert umfasst.

6. Verfahren nach einem der Ansprüche 1 bis 5, worin die verfeinerte Position eine Liste von Positionskandidaten umfasst.

7. Vorrichtung zum Verfeinern einer Position einer Einrichtung (204) unter Verwendung von Fuzzylogik, **gekennzeichnet durch**:

   einen Computer mit einem Speicher;
   eine Anwendung, zum Ablaufen auf dem Computer konfiguriert, worin die Anwendung dazu konfiguriert ist, eine ungefähre Position einer Einrichtung (802) zu bestimmen;
   eine Inferenzmaschine auf dem Computer, worin die Inferenzmaschine konfiguriert ist zum:

      Auslesen einer Regelbasis, die eine geordnete Sammlung von Regeln (802) umfasst;
      Erfassen einer Eingabe, worin die Eingabe auf einer Nähe zu einer bestimmten benutzeridentifizierten, bevorzugten Position (804) basiert;
      Verarbeiten von Mitgliedschaftsfunktionen, die im Speichercomputer gespeichert sind, worin die Mitgliedschaftsfunktionen einen Grad von Beteiligung der Eingabe an den Regeln (806) definieren;
      Anwenden der Regeln auf die Eingabe, auf dem Grad der Beteiligung (808) basierend; und
      Berechnen einer verfeinerten Position, auf den Regeln basierend, die auf der Basis des Grades von Beteiligung (810) auf die Eingabe angewendet werden.

8. Vorrichtung nach Anspruch 7, worin die Anwendung außerdem konfiguriert ist zum:

   Sammeln empirischer Daten; und
   progressiven Verfeinern der Regel auf der Basis der empirischen Daten.

9. Vorrichtung nach Anspruch 7 oder 8, worin die Regelbasis dazu konfiguriert ist, regionale Trends, soziale Trends und demografische Trends widerzuspiegeln.

10. Vorrichtung nach Anspruch 7, 8 oder 9, worin eine der Regeln ein Antezedens nutzt, um ein Sukzedens zu bestimmen.

11. Vorrichtung nach einem der Ansprüche 7 bis 10, worin eine Mitgliedschaftsfunktion eine dreiwertige Menge für jede Eingabe definiert, worin die dreiwertige Menge einen wahren Wert, einen falschen Wert und einen unbestimmten Wert umfasst.

**12.** Vorrichtung nach einem der Ansprüche 7 bis 11, worin die verfeinerte Position eine Liste von Positionskandidaten umfasst.

**Revendications**

**1.** Procédé mis en oeuvre dans un ordinateur, destiné à affiner un emplacement d'un dispositif (204) en utilisant une logique floue, **caractérisé par** :

la détermination d'un emplacement approximatif d'un dispositif (800);
la lecture d'une base de règles qui comprend une collection ordonnée de règles (802);
la capture d'une entrée, dans lequel l'entrée est basée sur une proximité d'un emplacement particulier favori identifié par un utilisateur (804) ;
le traitement de l'entrée en vue de déterminer une étendue de la participation de l'entrée aux règles (806) ;
l'application des règles à l'entrée sur la base de l'étendue de la participation (808) ; et
le calcul d'un emplacement affiné en fonction des règles appliquées à l'entrée sur la base de l'étendue de la participation (810).

**2.** Procédé selon la revendication 1, comprenant en outre :

la collecte de données empiriques ; et
l'affinement progressif de la base de règles sur la base des données empiriques.

**3.** Procédé selon la revendication 1 ou 2, dans lequel la base de règles est configurée de manière à refléter des tendances régionales, des tendances sociales et des tendances démographiques.

**4.** Procédé selon la revendication 1, 2 ou 3, dans lequel l'une des règles utilise un antécédent afin de déterminer une conséquence.

**5.** Procédé selon la revendication 1, 2, 3 ou 4, dans lequel un ensemble à trois valeurs est défini pour chaque entrée, dans lequel l'ensemble à trois valeurs comprend une valeur de vérité, une valeur fausse et une valeur d'incertitude.

**6.** Procédé selon l'une quelconque des revendications 1 à 5, dans lequel l'emplacement affiné comprend une liste d'emplacements candidats.

**7.** Dispositif destiné à affiner un emplacement d'un dispositif (204) en utilisant une logique floue, **caractérisé par** :

un ordinateur équipé d'une mémoire ;
une application configurée de manière à s'exécuter sur l'ordinateur, dans lequel l'application est configurée de manière à déterminer un emplacement approximatif d'un dispositif (802) ;
un moteur d'inférence sur l'ordinateur, dans lequel le moteur d'inférence est configuré de manière à:

lire une base de règles qui comprend une collection ordonnée de règles (802) ;
capturer une entrée, dans lequel l'entrée est basée sur une proximité d'un emplacement particulier favori identifié par un utilisateur (804) ;
traiter des fonctions d'appartenance stockées dans l'ordinateur mémoire, dans lequel les fonctions d'appartenance définissent une étendue de la participation de l'entrée aux règles (806) ;
appliquer les règles à l'entrée sur la base de l'étendue de la participation (808) ; et
calculer un emplacement affiné en fonction des règles appliquées à l'entrée sur la base de l'étendue de la participation (810).

**8.** Dispositif selon la revendication 7, dans lequel l'application est en outre configurée de manière à :

collecter des données empiriques ; et
affiner progressivement la règle sur la base des données empiriques.

9. Dispositif selon la revendication 7 ou 8, dans lequel la base de règles est configurée de manière à refléter des tendances régionales, des tendances sociales et des tendances démographiques.

10. Dispositif selon la revendication 7, 8 ou 9, dans lequel l'une des règles utilise un antécédent afin de déterminer une conséquence.

11. Dispositif selon l'une quelconque des revendications 7 à 10, dans lequel une fonction d'appartenance définit un ensemble à trois valeurs pour chaque entrée, dans lequel l'ensemble à trois valeurs comprend une valeur de vérité, une valeur fausse et une valeur d'incertitude.

12. Dispositif selon l'une quelconque des revendications 7 à 11, dans lequel l'emplacement affiné comprend une liste d'emplacements candidats.

# FIG. 1

102

100

104

FIG. 2

EP 1 459 505 B1

# FIG. 3

**Application Layer** — 302

Application Developer Code — 310

**Platform API** — 304

LbsDeviceLocatorManager — 312

**Internal Implementation** — 306

| Ericsson MPS Adapter | Carrier X LDT Adapter — 324 |
|---|---|
| Ericsson MPS Client Code | Carrier X LDT Client Code — 316 |

**Remote LDT Providers** — 308

| Ericsson MPS Server Code | Carrier X LDT Server Code — 318 |
|---|---|

# FIG. 4

θ₁  Starting angle
θ₂  Ending angle
d₁  Inner radius
d₂  Outer radius

Cell tower

# FIG. 5

```
┌─────────────────┐
│ INVOKE SIMPLIFIED│
│   PROCEDURES    │
│     OF API      │
└─────────────────┘
    500
         │
         ▼
┌─────────────────┐        ┌──────────┐
│ OBTAIN LOCATION │ ─ ─ ─→ │ INTERACT │
│ OF MOBILE DEVICE│        │   WITH   │
└─────────────────┘        │ CARRIER  │
    502                    │ ADAPTER  │
                           └──────────┘
                                504
         │
         ▼
┌─────────────────┐
│     OBTAIN      │
│  DESCRIPTION    │
│    OF SRS       │
└─────────────────┘
    506
         │
         ▼
┌─────────────────┐
│     REFINE      │
│    LOCATION     │
└─────────────────┘
    508
```

# FIG. 6

FUZZY INPUTS
702

CRISP-TO-FUZZY

MEMBERSHIP
FUNCTIONS
704

INFERENCE ENGINE
708

RULE BASE
706

FUZZY-TO-CRISP

MAX,
ROOT-MEAN-SQUARED
710

OUTPUT
712

*FIG. 7*

EP 1 459 505 B1

# FIG. 8

```
┌──────────────┐
│  DETERMINE   │
│ APPROXIMATE  │ ∿ 800
│  LOCATION    │
└──────────────┘
        │
        ▼
┌──────────────┐
│    READ      │ ∿ 802
│  RULE BASE   │
└──────────────┘
        │
        ▼
┌──────────────┐
│   CAPTURE    │ ∿ 804
│    INPUT     │
└──────────────┘
        │
        ▼
┌──────────────┐
│   PROCESS    │ ∿ 806
│    INPUT     │
└──────────────┘
        │
        ▼
┌──────────────┐
│ APPLY RULES  │ ∿ 808
└──────────────┘
        │
        ▼
┌──────────────┐
│   COMPUTE    │
│   REFINED    │ ∿ 810
│  LOCATION    │
└──────────────┘
```

SCHEMA

| |
|---|
| 904 — itemType : String |
| 906 — jdbcDataSource : String |
| 908 — schemaAttributeDefinitions : List ——— 1 to N ——→ |
| 910 — sqlSelect : String |

SchemaAttributeDefinition

name
type
constraint

902

234

## FIG. 9

UserProfileManager

1002 — insertSchema (itemType, schema)
1004 — setItem (userId, itemType, name, item, geom)
1006 — setItems (userId, itemType, nameList, itemList, geomList)
1008 — setItem (userId, itemType, name, item)
1010 — findItems (userId, itemType)
1012 — findItemsClosestTo (userId, itemType, Location)()
1014 — findItemsWithin (userId, itemType, Polygon)
1016 — insertProperty (userId, itemType, key, foreignKeyValue, location)()

1000

## FIG. 10

EP 1 459 505 B1

# FIG. 11

INSERT SCHEMA —1100

↓

CREATE
SCHEMA LIST —1102

↓

DEPLOY BRIDGE —1104

↓

OBTAIN
LOCATION
INFORMATION —1106

↓

STORE KEY AND
LOCATION
INFORMATION IN
UPPT —1108

↓

PROVIDE API —1110

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6236365 B
- GB 2352134 A
- US 6249252 B
- US 10034440 B